Europäisches Patentamt

European Patent Office

Office européen des brevets

(19)

(11) Veröffentlichungsnummer: **0 229 902**
**B1**

(12)

# EUROPÄISCHE PATENTSCHRIFT

(45) Veröffentlichungstag der Patentschrift:
05.07.89

(21) Anmeldenummer: 86115221.3

(22) Anmeldetag: 03.11.86

(51) Int. Cl.⁴: **F 16 F 9/02,** F 16 F 9/36,
**B 60 G 13/18**

(54) **Pneumatische Feder-Dämpfer-Einheit.**

(30) Priorität: 21.12.85 DE 3545536

(43) Veröffentlichungstag der Anmeldung:
29.07.87 Patentblatt 87/31

(45) Bekanntmachung des Hinweises auf die Patenterteilung:
05.07.89 Patentblatt 89/27

(84) Benannte Vertragsstaaten:
DE FR GB IT SE

(56) Entgegenhaltungen:
DE-A- 2 237 058
FR-A- 695 839
FR-A- 830 971
FR-A- 1 012 597
GB-A- 2 072 798
US-A- 3 333 653
US-A- 3 937 450

PATENT ABSTRACTS OF JAPAN, Band 5, Nr. 97
(M-75)[769], 24. Juni 1981; JP-A-56 42 732 (YAMAHA
HATSUDOKI K.K.) 21-04-1981

(73) Patentinhaber: AUDI AG, Postfach 220,
D-8070 Ingolstadt (DE)

(72) Erfinder: Gold, Henning, Prof. Dr.-Ing., Im Rheinblick 29,
D-6530 Bingen 1 (DE)

(74) Vertreter: Le Vrang, Klaus, AUDI AG
Postfach 220 Patentabteilung I/EQP, D-8070 Ingolstadt
(DE)

ACTORUM AG

**Beschreibung**

Die Erfindung betrifft eine pneumatische Feder-Dämpfer-Einheit zur Abstützung von zwei Bauteilen gegeneinander, insbesondere für ein Kraftfahrzeug, gemäß dem Oberbegriff des Patentanspruches 1.

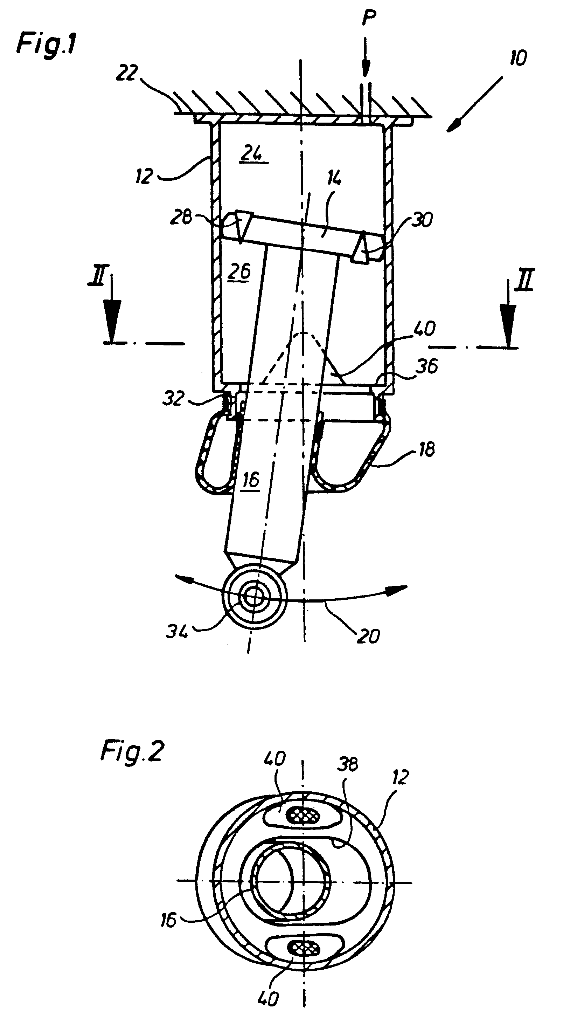

Eine gattungsgemäße, pneumatische Feder-Dämpfer-Einheit ist dem DE-GM 8 413 300 entnehmbar. Dabei ist der Kolben mit Kolbenstange im zylindrischen Gehäuse der Einheit geführt (Teleskop-Anordnung). Für die Funktion der Einheit werden bei dieser Bauart drei Räume gebildet, nämlich ein die Last tragender, beim Einfedern kleiner werdender Federraum, der durch den Gehäuseboden mit Kolbenstangenführung und den Rollbalg umschlossen ist, sowie zwei weitere, durch den Kolben im Gehäuse unterteilte Dämpferräume (vgl. z.B. Fig. 1 des Gebrauchsmusters), von denen einer beim Einfedern kleiner, der andere größer wird.

Durch die US-A 3 333 653 ist ein hydropneumatisches Federelement in Mc Pherson-Anordnung bekannt, bei dem das zylindrische Gehäuse fest mit dem Aufbau des Kraftfahrzeuges verbunden ist, die Kolbenstange an den Radträger der Radaufhängung angeformt ist und der in dem zylindrischen Gehäuse geführte Kolben sphärisch ausgebildet ist. Sich aus der Radaufhängung ergebende Winkelausschläge des Radträgers bzw. der Kolbenstange werden durch den sphärischen Kolben ausgeglichen. Das zylindrische Gehäuse ist zur Kolbenstange hin offen ausgebildet und mittels einer Manschette gegen das Eindringen von Schmutz oder Feuchtigkeit abgedichtet. Parallel neben dem Federelement ist ein hydraulischer Teleskop-Stoßdämpfer vorgesehen.

Ferner ist durch die FR-A 695 893 ein pneumatisches Federelement bekannt, bei dem ebenfalls das zylindrische Gehäuse fest mit dem Aufbau des Kraftfahrzeuges verbunden ist. Zwischen der mit der Radaufhängung verbundenen Kolbenstange und dem in dem zylindrischen Gehäuse verschiebbar geführten Kolben ist ein Kugelgelenk zum Ausgleich der Winkelausschläge der Kolbenstange dazwischengeschaltet. Das zylindrische Gehäuse ist nach unten durch eine Platte abgedeckt, an der der Schaft des in dem zylindrischen Gehäuse verschiebbaren Kolbens unter Dazwischenschaltung einer Dämpfungsscheibe anschlagen kann und die ferner eine Ausnehmung aufweist, die die Winkelausschläge der Kolbenstange zuläßt.

Aufgabe der Erfindung ist es, eine hinsichtlich des Führungs- und Dichtungsaufwandes vereinfachende, weniger Baulänge erfordernde Feder-Dämpfer-Einheit der gattungsgemäßen Art zu schaffen.

Diese Aufgabe wird mit den kennzeichnenden Merkmalen des Patentanspruches 1 gelöst.

Erfindungsgemäß sind nur zwei Räume innerhalb der Feder-Dämpfer-Einheit gebildet, nämlich der beim Einfedern kleiner werdende Dämpfer- und Federraum und ein an der entgegengesetzten Kolbenfläche angrenzender, durch den Rollbalg verschlossener und beim Einfedern größer werdender Dämpferraum. Durch den Rollbalg kann der Dämpferraum trotz der Schwenkbeweglichkeit der Kolbenstange dicht abgeschlossen sein. Sofern die Drosselwirkung beim Überströmen von Gas zwischen den beiden Räumen nicht durch eine gezielte Leckage des Kolbens gebildet ist, kann im Kolben, wie in dem vorgenannten Gebrauchsmuster dargestellt, ein Drosselorgan vorgesehen sein.

Der kolbenstangenseitige Boden des Gehäuses ist als Ausfederanschlag vorgesehen. Dabei greifen die an den mit einer Ausnehmung versehenen Gehäuseboden abgestützten Gummipuffer symmetrisch, d.h. in einer quer zur Schwenkbewegung verlaufenden Gehäusemittelebene, am Kolben an. Dadurch werden Verkant- oder Kippkräfte bei ausgefedertem Kolben vermieden.

Der Kolben sowie dessen Abdichtung kann entsprechend den Merkmalen des Anspruches 2 ausgeführt sein. Während der Gleitring aus einem besonders gleitfähigen Material, z.B. PTFE oder PTFE-vernetztes Metallgewebe, einen geringen Verschleiß sicherstellt, ist durch den elastischen Ring eine sichere Abdichtung bzw. Anpressung des Gleitringes auch bei schräg im Gehäuse sitzenden Kolben gewährleistet.

Entsprechend den Merkmalen des Anspruches 3 ist die Kolbenstange mit Kolben unmittelbar starr an einem Längslenker des Kraftfahrzeuges angeordnet, während das Gehäuse schwenkbeweglich am Aufbau angelenkt ist. Dadurch ergibt sich ein stark verringerter Herstellungs- und Teileaufwand, sowie eine vereinfachte Montage. Bei einem Längslenker an einer Verbundlenker-Hinterachse als Radführungsglied kann aufgrund des dann benötigten, geringen Einbauraumes der Hinterboden des Kraftfahrzeuges ohne größere Einengungen des Kofferraumes und bei günstigem Freigang der Räder gestaltet werden.

Die Feder-Dämpfer-Einheit kann vorteilhaft gemäß Anspruch 4 als radführendes Federbein bei Kraftfahrzeugen ausgebildet sein. Dabei kann zur Kompensation von Querkräften die Kolbenstange im Bereich der Abstützstelle für die Rollmembrane gegenüber der Mittelachse des Gehäuses entsprechend geneigt sein. Unabhängig von dieser Neigung wird das Momentanzentrum der Radführung von der Neigung der Mittelachse des Gehäuses gegenüber einer Senkrechten bestimmt. Die Verdrehbarkeit der Feder-Dämpfer-Einheit kann dabei mittels des am Radträger ausgebildeten Dornes hergestellt sein. Eine derartige Drehlagerung kann sicher die im Fahrbetrieb auftretenden statischen und dynamischen Kräfte bei Aufrechterhaltung einer leichten Lenkbarkeit aufnehmen.

Mehrere Ausführungsbeispiele der Erfindung sind im folgenden mit weiteren Einzelheiten näher erläutert. Die Zeichnung zeigt in

Fig. 1 in schematischer Darstellung eine Feder-Dämpfer-Einheit ohne Radführung für ein Kraftfahrzeug;

Fig. 2 einen Schnitt gemäß Linie II-II in Fig. 1;

Fig. 3 den Kolben der Feder-Dämpfer-Einheit gemäß Fig. 1 in vergrößerter Darstellung;

Fig. 4 einen weiteren Kolben mit Abdichtung einer Feder-Dämpfer-Einheit gemäß Fig. 1;

Fig. 5 eine Feder-Dämpfer-Einheit im Schnitt mit einer in der Kolbenstange angeordneten, gedämpften Tilgermasse;

Fig. 6 in schematischer Darstellung eine Feder-Dämpfer-Einheit an einer Verbundlenker-Hinterachse eines Kraftfahrzeuges;

Fig. 7 ebenfalls in schematischer Darstellung eine Feder-Dämpfer-Einheit als radführendes Federbein eines lenkbaren Rades eines Kraftfahrzeuges.

Die Fig. 1 zeigt den grundsätzlichen Aufbau der Feder-Dämpfer-Einheit 10 mit einem zylindrischen Gehäuse 12, einem Kolben 14 mit einer Kolbenstange 16 und einem Rollbalg 18. Der scheibenförmige Kolben 14 ist mit der Kolbenstange 16 starr verbunden und in dem zylindrischen Gehäuse 12 axial verschiebbar sowie zusammen mit der Kolbenstange 16 um die Zylinderachse des Gehäuses 12 schwenkbar. Dabei ist die Ebene des Doppelpfeiles 20 als Hauptschwenkebene ausgeführt.

Das Gehäuse 12 ist an dem nicht näher dargestellten Aufbau 22 des Kraftfahrzeuges starr befestigt. Gegebenenfalls kann das Gehäuse 12 unmittelbar an den Aufbau 22 des Kraftfahrzeuges angeformt sein. Es kann jedoch zur Isolierung von Geräuschen auch mit Gummi montiert sein.

Der Kolben 14 unterteilt das Gehäuse 12 in einen beim Einfedern der Einheit kleiner werdenden Feder- und Dämpferraum 24 und einen beim Einfedern größer werdenden Dämpferraum 26. In dem Kolben sind Drosseln 28, 30 vorgesehen, die ein Überströmen von in den Räumen 24, 26 unter Druck stehendem Gas ermöglichen. Die Drosseln können dabei entsprechend dem deutschen Gebrauchsmuster 8 413 300 ausgebildet sein. Ferner sind die Räume 24, 26 mit einer nicht dargestellten Druckgasquelle zur Aufrechterhaltung oder Einsteuerung eines definierten Gasdruckes verbunden.

Der in der Zeichnung unterhalb des Kolbens 14 liegende Dämpferraum 26 wird durch den Rollbalg 18 verschlossen, welcher an einem nach unten abragenden Kragen 32 des zylindrischen Gehäuses 12 und am Schaft der Kolbenstange 16 festgelegt ist. Ferner weist die Kolbenstange 16 an ihrem freien Ende ein Befestigungsauge 34 auf, mit dem die Kolbenstange 16 an einem Radführungselement, beispielsweise an einer Hinterachse, anlenkbar ist.

Ein an das Gehäuse 12 angeformter Boden 36 weist eine in der Draufsicht ovale Ausnehmung 38 auf, welche die Schwenkbeweglichkeit der Kolbenstange 16 in der angegebenen Schwenkebene besonders groß macht. Beiderseits der Ausnehmung 38 sind an dem Boden 36 elastische Puffer 40 als Ausfederanschläge angeordnet, welche quer zur Hauptschwenkebene in der Mittelachse des Kolbens 14 angreifen, so daß Verkant- oder Kippkräfte beim Anschlag des Kolbens 14 an den elastischen Puffern 40 eliminiert sind.

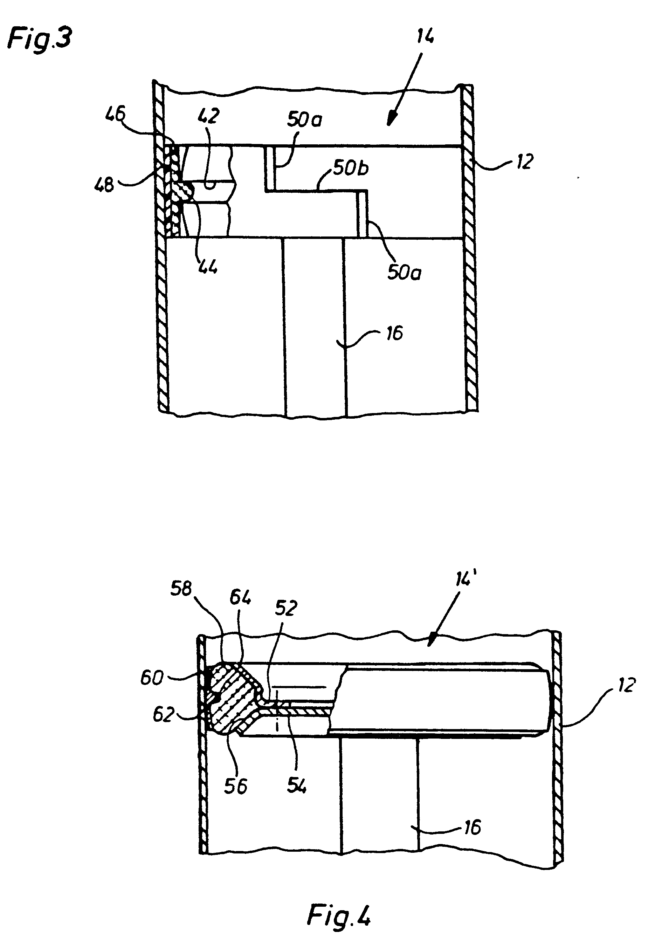

Die Schwenkbeweglichkeit der Kolbenstange 16 sowie des Kolbens 14 wird einerseits durch die Ausnehmung 38 im Gehäuseboden 36 sowie durch die eine Schrägstellung des Kolbens 14 zulassende Konfiguration des Kolbens und seiner Abdichtung gemäß den Figuren 3 und 4 ermöglicht.

Gemäß Fig. 3 ist der Kolben 14 an seinem Außenumfang ballig gestaltet und mit einer Ringnut 42 versehen. In diese Ringnut 42 ragt der Ringsteg 44 eines elastischen Ringes 46 aus Gummi ein. Auf dem Gummiring 46 ist ein Gleitring 48 aus PTFE-vernetztem Metallgewebe mit einem niedrigen Reibungskoeffizienten aufvulkanisiert. Der beschriebene Dichtring ist einseitig offen, wobei die etwa Z-förmige Trennstelle axiale Abschnitte 50a und einen Umfangsabschnitt 50b aufweist. Der Umfangsabschnitt 50b verläuft in dem Ringsteg 44, so daß der Dichtring 46, 48 auch im Bereich der in Umfangsrichtung verlaufenden Trennstelle axial gesichert und abdichtend gehalten ist.

Bei einer Schrägstellung des Kolbens 14 wälzt sich der Dichtring 46, 48 auf der balligen Umfangsfläche des Kolbens 14 ab, wodurch auch bei schräg positioniertem Kolben 14 eine sichere Abdichtung und Führung des Kolbens 14 im Gehäuse 12 gewährleistet ist.

Der Kolben 14' kann jedoch auch wie in der Fig. 4 dargestellt gestaltet und abgedichtet sein. Dabei ist der Kolben 14 aus zwei an den Umfangsrändern abgestellten Scheiben 52, 54 gebildet, die eine im Querschnitt etwa V-förmige Umfangsnut 56 ergeben. In dieser Umfangsnut 56 ist ein Dichtring 58 aus Gummi eingelegt, auf dem ein Gleitring 60 gehalten ist. Der Gleitring 60 ist mit einem Ringsteg 62 in einer korrespondierenden Ringnut 64 des elastischen Dichtringes 58 verankert. Der Gleitring kann auch aufgeklebt oder anvulkanisiert sein. Der Gleitring 60 ist zusammen mit dem elastischen Ring 58 leicht ballig ausgeführt, so daß sich im Zusammenwirken mit der Elastizität des Gummiringes 58 auch bei einer Schrägstellung des Kolbens 14' eine leichtgängige Verschiebung und eine sichere Abdichtung des Kolbens 14' im Gehäuse 12 einstellen.

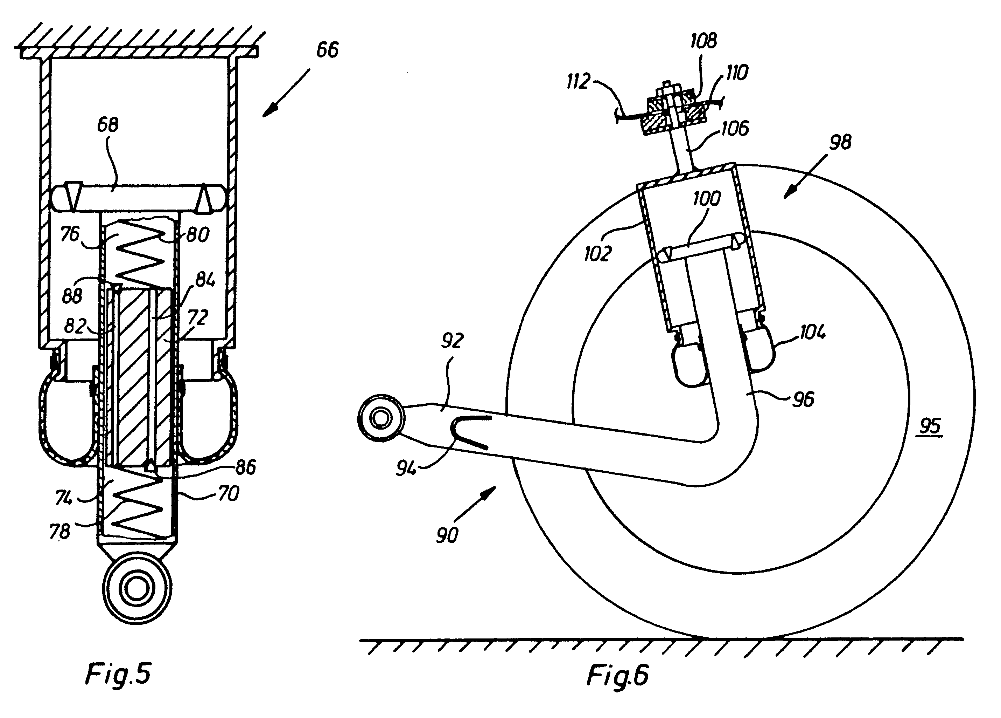

In der soweit nicht beschriebenen teilegleichen Feder-Dämpfer-Einheit 66 (Fig. 5) ist die mit dem Kolben 68 verbundene Kolbenstange 70 hohlzylindrisch ausgebildet und in dieser eine Tilgermasse 72 zur von der Aufbaudämpfung unabhängigen Achsdämpfung des Kraftfahrzeuges angeordnet. Die Tilgermasse 72 ist als ein Kolben ausgebildet, der den hohlzylindrischen Raum innerhalb der Kolbenstange 70 in zwei Dämpferräume 74, 76 unterteilt. Die Tilgermasse wird mittels zweier Schraubendruckfedern 78, 80 (oder gegebenenfalls Gummifedern) in einer Mittelstellung gehalten. In der Tilgermasse 72 sind zwei Überströmkanäle 82, 84 vorgesehen, die von entsprechenden Drosseln 86, 88 beherrscht sind. Als Arbeitsmedium dient Gas (Luft) oder Öl.

Bei auf der Kolbenstange 70 von der Achse bzw. Radführung des Kraftfahrzeuges ausgeübten Schwingungen bewirkt die Tilgermasse 72, die sich in Schwingungsrichtung relativ zur Kolbenstange 70 verschieben kann und dabei das Gasvolumen in den Dämpferräumen 74, 76 alternierend verdrängt, eine definierte zusätzliche Achsdämpfung.

Die Fig. 6 zeigt in einem Längsschnitt in der Längsmittelebene eines Kraftfahrzeuges eine Verbundlenkerachse 90, die sich im wesentlichen aus zwei Längslenkern 92 (auf der Zeichnung ist nur ein Längslenker 92 ersichtlich) und einer die beiden Längslenker 92 verbindenden, verdrehweichen Querstrebe 94 zusammensetzt. Die Längslenker sind am Aufbau des Kraftfahrzeuges angelenkt und tragen Achszapfen, auf denen drehbar die Räder 94 gelagert sind.

An den Längslenkern 92 als Radführungselement ist unmittelbar die Kolbenstange 96 der Feder-Dämpfer-Einheit 98 angeformt. Die den Kolben 100 tragende Kolbenstange 96 ragt in das Gehäuse 102 der Feder-Dämpfer-Einheit 98 ein; das Gehäuse 102 ist mittels des Rollbalges 104 wie vorstehend beschrieben abgedichtet.

An das Gehäuse 102 ist ein Aufnahmezapfen 106 angeschweißt, über welchen das Gehäuse 102 verschwenkbar über elastische Gummilager 108, 110 mit dem Aufbau 112 des Kraftfahrzeuges verbunden ist.

Beim Ein- oder Ausfedern des Radführungselementes odes des Aufbaues kann sich somit durch entsprechendes Verschwenken des Gehäuses 102 eine Angleichung an den eine Kreisbahn beschreibenden Kolben 100 einstellen. Dabei ist in kinematischer Umkehr nicht der Kolben 100 in dem zylindrischen Gehäuse 102, sondern das zylindrische Gehäuse 102 auf dem starr mit dem Längslenker 92 über die Kolbenstange 96 verbundenen Kolben 100 geführt. Soweit nicht beschrieben, ist die Feder-Dämpfer-Einheit 98 entsprechend den vorbeschriebenen Ausführungsbeispielen ausgeführt.

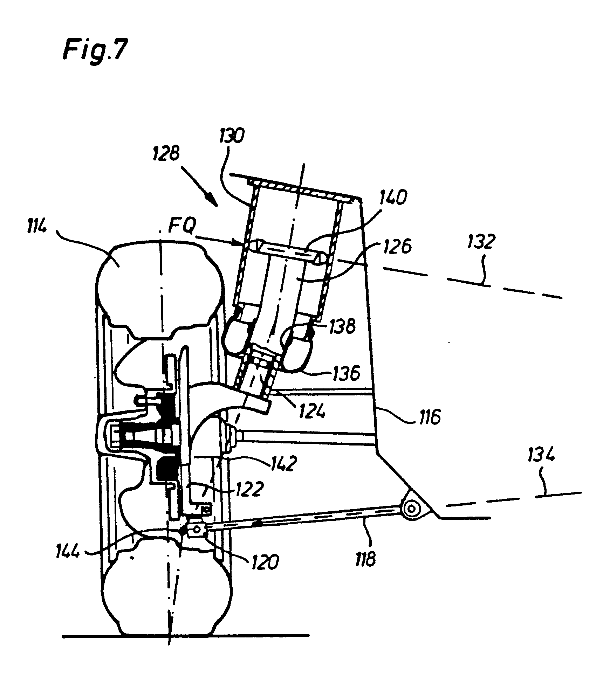

Die Fig. 7 schließlich zeigt eine Radführung eines gelenkten Vorderrades 114 eines Kraftfahrzeuges mit einem am Aufbau 116 angelenkten Querlenker 118, der über ein Kugelgelenk 120 mit einem Radträger 122 verbunden ist. An dem Radträger 122 ist ein nach oben innen ragender Dorn 124 befestigt, auf dem drehbar die Kolbenstange 126 einer als Federbein ausgeführten Feder-Dämpfer-Einheit 128 gelagert ist. Die Drehlagerung ist in nicht dargestellter Weise als Wälzlagerung ausgeführt und beinhaltet eine axiale Sicherung zwischen Dorn 124 und Kolbenstange 126. Wird das Drehlager in den Mittelpunkt des balligen Kolbens 140 verlegt (nicht dagestellt), so entstehen keine Kippmomente; das Drehlager könnte dann durch ein einfaches Kugellager gebildet sein. Um Klappergeräusche zu vermeiden, könnte in einem gewissen Abstand ein zweites, im wesentlichen kraftfreies Lager angeordnet sein.

Das zylindrische Gehäuse 130 der Feder-Dämpfer-Einheit 128 ist relativ starr am Aufbau 116 befestigt. Ein senkrecht auf die Mittelachse des zylindrischen Gehäuses 130 gerichteter Polstrahl 132, der zugleich durch den Mittelpunkt des balligen Kolbens geht, definiert mit einem durch den Querlenker 118 verlaufenden Polstrahl 134 an der Schnittstelle das Momentanzentrum der Radführung.

Der die Rollmembran 136 abstützende Abschnitt 138 der Kolbenstange 126 ist zur Kompensation von Querkräften FQ im Bereich des Kolbens 140 gegenüber der Mittelachse des Gehäuses 130 derart geneigt, daß dessen verlängerte Mittelachse 142 im Schnittpunkt 144 der Radmittenebene mit der verlängerten Querlenker-Längsachse (Polstrahl 134) liegt. Durch geeignete Abknickung der Kolbenstange 126 und damit verbunden entsprechende Schrägstellung des Rollbalges 136 kann somit eine Querkraftkompensation unabhängig von der das Momentanzentrum bestimmenden Winkelstellung des Gehäuses 130 gegenüber einer Senkrechten ausgelegt werden.

Es versteht sich, daß die Kolbenstange 126 bei einer Radführung an einem ungelenkten Rad unmittelbar mit dem Radträger 122 verschweißt oder an diesem befestigt sein kann. Soweit nicht beschrieben, kann die Feder-Dämpfer-Einheit 128 wiederum entsprechend den vorbeschriebenen Feder-Dämpfer-Einheiten ausgebildet sein.

## Patentansprüche

1. Pneumatische Feder-Dämpfer-Einheit zur Abstützung von zwei Bauteilen gegeneinander, insbesondere für ein Kraftfahrzeug, mit einem zylindrischen Gehäuse und einem in diesem Gehäuse verschiebbar geführten Kolben, der das Gehäuse in einen beim Einfedern kleiner werdenden, vom Gehäuse umschlossenen Raum und einen beim Einfedern größer werdenden Raum unterteilt, einem mit dem Kolben gebildeten, in zwei Richtungen durchströmbaren Drosselorgan sowie einer am Kolben festgelegten Kolbenstange und einem mit der Kolbenstange und dem Gehäuse verbundenen Rollbalg, dadurch gekennzeichnet, daß

a. die Kolbenstange (16; 70; 96; 126) relativ zum Gehäuse (12; 102; 130) schwenkbeweglich ist,

b. der Kolben (14; 68; 100; 140) und/oder die Kolbendichtung eine Schwenkbewegung zulassende Konfiguration aufweisen,

c. das Gehäuse oder der Kolben mit Kolbenstange relativ starr am angrenzenden Bauteil angeordnet ist,

d. an der offenen Gehäuseseite ein Boden (36) mit einer der Schwenkbewegung der Kolbenstange entsprechenden Ausnehmung vorgesehen ist,

e. am Boden (36) des Gehäuses elastische Puffer (40) angeordnet sind, die in der Ausfederstellung quer zur Schwenkachse der Kolbenstange symmetrisch am Kolben angreifen.

2. Feder-Dämpfer-Einheit nach Anspruch 1, dadurch gekennzeichnet, daß der Kolben (14) eine Ringnut (42) aufweist, in die mit einem nach innen ragenden Ringsteg (44) ein federnder Dichtring (46) eingesetzt ist, wobei der Dichtring eine einen axialen Abschnitt und einen Umfangsabschnitt aufweisende Trennstelle (50a, 50b) besitzt und die Umfangs-Trennstelle durch den Ringsteg (44) verläuft und daß der Dichtring durch einen äußeren, reibungsarmen Ring (48) und einen inneren, federnd elastischen Ring gebildet ist.

3. Feder-Dämpfer-Einheit nach Anspruch 1 und/oder 2, dadurch gekennzeichnet, daß der Kolben (100) mit Kolbenstange (96) unmittelbar starr an einem Längslenker (92) als Radführungselement angeordnet ist und daß das Gehäuse (102) schwenkbeweglich am Aufbau (112) angelenkt ist.

4. Feder-Dämpfer-Einheit nach Anspruch 1 und/oder 2, an einem radführenden Federbein eines Kraftfahrzeuges, dadurch gekennzeichnet, daß die Kolbenstange (126) am Radträger (122) und das Gehäuse (130) am Aufbau (116) des Kraftfahrzeuges befestigt ist, wobei der die Rollmembran (136) abstützende Abschnitt (138) der Kolbenstange zur Kompensation von Querkräften FQ gegenüber der Mittelachse des Gehäuses (130) geneigt ist und daß die Kolbenstange (126) auf einem mit dem Radträger (122) fest verbundenen Dorn (124) verdrehbar, jedoch axial unverschiebbar gelagert ist.

**Claims**

1. Pneumatic spring damper unit for bracing two components against one another, especially for a motor vehicle, with a cylindrical housing and a piston which is guided within this housing so that it can be displaced and which divides the housing into a space which is enclosed by the housing and becomes smaller during the contraction stroke and a space which becomes larger during the contraction stroke, a flow restrictor device, formed with the piston, through which the flow can pass in two directions, and a piston rod attached to the piston and a roller bellows joined to the piston rod and the housing, characterized in that

   a. the piston rod (16; 70; 96; 126) can be slewed relative to the housing (12; 102; 130),

   b. the piston (14; 68; 100; 140) and/or the piston seal have a configuration which permits a slewing motion,

   c. the housing or the piston with piston rod is installed relatively rigidly on the adjacent component,

   d. a base (36) with an opening corresponding to the slewing motion of the piston rod is provided at the open side of the housing,

   e. elastic buffers (40) are installed on the base (36) of the housing which act symmetrically on the piston at right angles to the slewing axis on the piston rod in the extension stroke position.

2. Spring damper unit according to Claim 1, characterized in that the piston (14) has an annular groove (42) into which is inserted a flexible sealing ring (46) with an inward projecting annular ridge (44), in which the sealing ring has a break (50a, 50b) having an axial section and a circumferential section, and the circumferential break passes through the annular ridge (44) and in that the sealing ring is formed by an outer, low-friction ring (48) and an inner, flexibly elastic ring.

3. Spring damper unit according to Claim 1 and/or 2, characterized in that the piston (100) with piston rod (96) is installed directly and rigidly on a longitudinal control arm (92) as a wheel guide element and in that the housing (102) is coupled to the vehicle body (112) so that it can slew.

4. Spring damper unit according to Claim 1 and/or 2, on a wheel-guiding shock-absorber leg of a motor vehicle, characterized in that the piston rod (126) is attached to the wheel mount (122) and the housing (130) is attached to the vehicle body (116) of the motor vehicle, in which the section (138) of the piston rod supporting the roller membrane (136) is inclined relative to the central axis of the housing (130) to compensate for lateral forces FQ, and in that the piston rod (126) is mounted so that it can be rotated on a pin (124) rigidly connected to the wheel mount (122) but cannot be slewed axially.

**Revendications**

1. Ensemble-amortisseur-ressort pneumatique pour l'appui de deux parties structurales l'une contre l'autre, notamment pour un véhicule automobile, comportant un carter cylindrique et un piston guidé en translation dans ce carter et qui divise le carter en une chambre entourée par le carter et diminuant lors d'une compression de l'ensemble et en une chambre augmentant lors d'une compression de l'ensemble, l'ensemble comportant en outre un organe d'étranglement créé avec le piston, pouvant être traversé dans deux directions, ainsi qu'une tige de piston fixée sur le piston et un soufflet enroulable relié à la tige de piston et au carter, caractérisé en ce que:

   a. la tige de piston (16; 70; 96; 126) est mobile par pivotement par rapport au carter (12; 102; 130),

   b. le piston (14; 68; 100; 140) et/ou l'étanchéité de piston ont une configuration autorisant un mouvement de pivotement,

   c. le carter ou le piston et sa tige est disposé relativement rigidement sur un composant adjacent,

   d. il est prévu sur le côté ouvert du carter un fond (36) pourvu d'un évidement correspondant au mouvement de pivotement de la tige de piston,

   e. il est prévu sur le fond (36) du carter des butoirs élastiques (40), qui agissent symétriquement sur le piston et perpendiculairement à l'axe de pivotement de la tige de piston dans la position d'extension dudit ensemble.

2. Ensemble-amortisseur-ressort selon la revendication 1, caractérisé en ce que le piston (14) comporte une gorge (42) dans laquelle est engagé un anneau élastique d'étanchéité (46) par une nervure annulaire (44) faisant saillie vers l'intérieur, l'anneau d'étanchéité étant pourvu d'une zone de séparation (50a, 50b) comportant une partie axiale et une partie périphérique, la partie périphérique de la zone de séparation passant par la nervure annulaire (44), et en ce que l'anneau d'étanchéité est constitué par un anneau extérieur (48) à faible frottement et par un anneau intérieur élastique et souple.

3. Ensemble-amortisseur-ressort selon la revendication 1 et/ou 2, caractérisé en ce que le piston (100) est relié par sa tige (96) directement et rigidement avec un bras oscillant longitudinal (92) servant d'élément de guidage de roue, et en ce que le carter (102) est articulé sur le châssis (112) avec possibilité de pivotement.

4. Ensemble-amortisseur-ressort selon la revendication 1 et/ou 2, prévu sur une jambe élastique de guidage de roue d'un véhicule automobile, caractérisé en ce que la tige de piston (126) est fixée sur le support de roue (122) et le carter (130) sur le châssis (116) du véhicule automobile, la partie (138) de la tige de piston, soutenant la membrane enroulable (136), étant inclinée, en vue d'une compensation de forces transversales FQ, par rapport à l'ace central du carter (130), et en ce que la tige de piston (126) est montée, avec possibilité de rotation mais cependant sans possibilité de translation axiale, sur un mandrin (124) relié rigidement au support de roue (122).

*Fig.1*

*Fig.2*

7

Fig.3

Fig.4

Fig.5

Fig.6

EP 0 229 902 B1

# Fig.7